# EUROPEAN PATENT APPLICATION

(11) **EP 1 460 587 A2**
(43) Date of publication of application: **22.09.2004**
(21) Application number: 04005377.9
(22) Date of filing: 06.03.2004
(51) Int. Cl.: G06T 9/00

(54) **Dual video compression method for network camera and network digital video recorder**

(30) Priority: 20.03.2003 KR 2003017420
(71) Applicant: Sungjin C&C Co.,LTD., Seoul, 153-802 (KR)
(72) Inventor: Lim, Byeong-Jin, Seocho-ku, Seoul 137-049 (KR); Lim, In-Keon, Seocho-ku Seoul 137-049 (KR)
(74) Representative: Eisenführ, Günther, Dipl.-Ing.

(57) **Abstract**

Provided are a dual moving picture compression method that executes both moving picture compression for displaying a moving picture with high picture quality in real-time and moving picture compression for recording the moving picture at a high compression ratio and a low speed, and a network camera and a network DVR employing the same. The network camera includes two moving picture encoders that dually compress an image to transmit them to a network.

The network DVR receives the dually compressed image to display the image on a monitor in real time and, simultaneously record the image at a high compression ratio and a low speed. Accordingly, the requirements for real-time moving picture display and long-term recording can be simultaneously satisfied.

## Description

### FIELD OF THE INVENTION

The present invention relates to a network camera and a network digital video recorder (hereinafter, referred to as "a network DVR"). Specifically, the invention relates to a dual moving picture compression method that executes both moving picture compression for displaying a moving picture with high picture quality at a high speed in real-time and moving picture compression for recording the moving picture at a high compression ratio and a low speed, and a network camera and a network DVR employing the same.

### BACKGROUND OF THE RELATED ART

A network DVR comes within the category of a digital video recorder that is a device indispensable for video monitoring. The digital video recorder serves to compress video signals captured by a plurality of video cameras (four or sixteen channels, for example) into digital video data and stores it in hard discs. Then, the digital video recorder reproduces, transmits or backs up the stored digital video data if required.

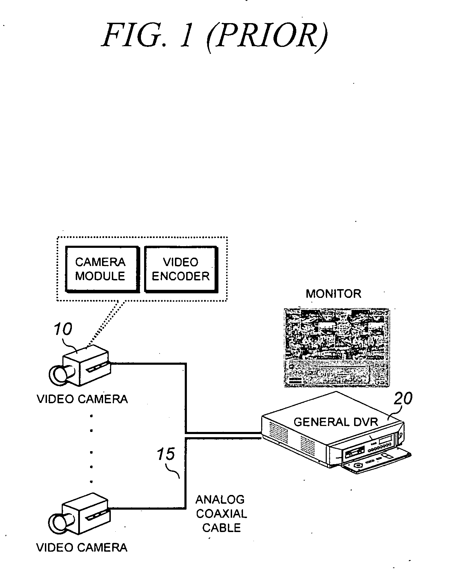

FIG.1 shows the construction of a conventional DVR system. Referring to FIG.1, a video signal captured by each video camera 10 is converted into an analog video signal by a video encoder embedded in the video camera 10 to be applied to a DVR 20 through a cable 15. The analog video signal inputted to the DVR 20 is converted into digital video data through a video decoder chip, compressed by a moving picture encoder, and then stored in a hard disc.

Here, the video signal outputted from the video camera 10 is an analog signal and it is inputted to the DVR 20 through a coaxial cable 15. Thus, the cable 15 connected between the video camera 10 and DVR 20 transfers analog signals while the video camera 10 and DVR 20 handles digital signals.

The cable 15 must be connected between the video camera 10 and DVR 20 in a one-to-one manner because it should transmit analog signals, which makes it difficult to install the cable and results in increased installation cost. For instance, in the case where 1600 video cameras are installed in a large building, 1600 cables are required.

Furthermore, 100 digital video recorders are needed when 16 channels are used. That is, when a specific building or area is monitored using several hundreds to thousands of video cameras, cables as many as the video cameras must be connected to a central control center in which a DVR is installed by several tens to hundreds meters in order to transmit video signals captured by the video cameras to the DVR.

However, this is difficult to actually carry out and increases the installation cost in proportion to the number of cables and installation distance.

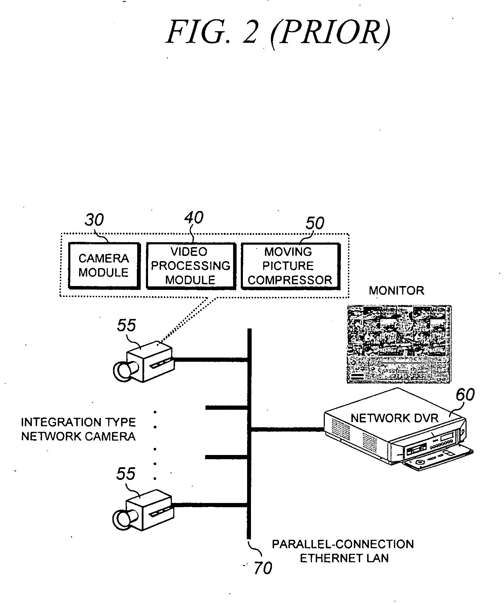

To solve the above-mentioned problem, the concept of a network camera and a network DVR were introduced. FIG.2 shows the construction of a conventional network camera and network DVR. Techniques associated with the network DVR are disclosed in International Patent Publication WO 2002/80033 and Korean Patent Laid-Open Publication No. 2002-0018988.

Referring to FIG.2, a network camera 55 has a camera module 30 and a moving picture encoder 50 embedded therein in order not to use analog cables that are costly and occupy a large installation space. Here, the camera module 30 and moving picture encoder 50 can be integrated into the network camera 55 or separated from the network camera.

In the case of the network camera integrated with the camera module and moving picture encoder, the camera module is directly connected to the moving picture encoder in digital fashion. On the other hand, the network camera separated from the camera module and moving picture encoder includes a video decoder chip instead of the camera module so as to receive analog video signals transmitted from a conventional video camera.

The separation type network camera is generally installed in close proximity to the video camera to be connected with the video camera through a coaxial cable as short as several meters.

A digital video signal inputted to the moving picture encoder 50 embedded in the network camera 55 is digitally compressed and outputted as bit stream data. This bit stream data is transmitted to the network DVR 60 through a network 70 such as the Ethernet.

Moving image data transmitted from each network camera is displayed on the monitor of the network DVR 60 in real time and, simultaneously, stored in a hard disc. The operator of the network DVR 60 can reproduce, transmit or back up the stored data if required.

As described above, the network cameras use the network 70, but not analog cables, in order to transmit images so that they can be easily connected in parallel with the network 70 within a range that does not exceed the bandwidth of the network 70 using parallelism that is characteristic of the Ethernet. Accordingly, the number of network LAN cables 70 for connecting the network cameras to the network DVR becomes remarkably smaller than that of the network cameras so that the space and cost for installing cables can be decreased.

In general, the DVR has a function of displaying a video signal inputted thereto on its monitor in real time and a function of recording the digitally compressed video data in a hard disc. In the case of display, when the operator operates the DVR, he/she wants to display all of images captured by cameras on the monitor in real time (30 frames per second in the case of NTSC and 25 frames per second in the case of PAL, explanation is made based on NTSC hereinafter).

On the other hand, in the case of recording, the operator wants to record the images at a speed as low as 1-8fps, but not at the maximum speed, in order to save the hard disc space because real-time recording at the same speed as the displaying speed (30 frames per second) requires a hard disc capacity several times the capacity needed for low-speed recording.

To'satisfy this requirement, the conventional DVR shown in FIG.1 generally includes a real-time display board that displays video signals outputted from video cameras in real time all the time and a capture board for recording by which a user can record images at a desired speed within a range of less than 30 frames per second for each camera.

Accordingly, the network camera and network DVR shown in FIG.2 have technical problems due to the' aforementioned requirement.

As described above, the network camera converts a video signal captured by the camera module 30 into digital video data, compresses the converted digital video data through the moving picture compressor 50 to transmit the compressed data to the network DVR 60 through the network 70. Here, the network DVR 60 stores the compressed data in a hard disc and, simultaneously, decompresses the compressed data to display it on the monitor.

In the case where a method of compressing moving pictures at a high compression ratio, such as MPEG, is employed, however, the display speed and recording speed of the network DVR become identical to each other theoretically when the network camera compresses images to transmit them to the network DVR.

The moving picture compression technique such as MPEG is based on an algorithm that compresses a moving picture on the basis of a difference between a current frame and a previous frame of the moving picture to reduce the size of compressed bit stream data.

Thus, after the bit stream data has been compressed at a fixed speed and picture quality once, it is impossible to extract the compressed data at any speed and picture quality lower than the fixed speed and picture quality without decompressing the compressed data.

For example, bit stream data cannot be extracted at a low rate corresponding to 1 - 29 frames per second and VHS-graded resolution from bit stream data compressed at 30 frames per second and DVD-graded resolution.

Accordingly, when compressed data is transmitted from the network camera to the network DVR 60 in the system shown in FIG.2, the operator has no choice but to select one of a method of recording images at a high speed corresponding to the real-time display speed or a method of displaying the images at a low speed corresponding to a low recording speed.

In the case of the former, real-time display can be carried out but large capacity of the hard disc is needed for high-speed recording to increase costs. In the case of the latter, a moving picture with high picture quality and smooth motion cannot be obtained because of the low display speed. Practically, the latter is employed in terms of cost.

In the case where a still' image compression technique such as JPEG or Wavelet instead of the moving picture compression method is applied to moving picture compression, when a moving picture is compressed at a fixed rate and picture quality, compressed data at a rate lower than the fixed rate can be extracted though the picture quality cannot be changed.

Thus, some of the aforementioned problems can be solved. For example, from bit stream data compressed at a rate of 30 frames per second, bit stream data with the same picture quality as that of the compressed data and 1-29 frames per second can be extracted.

However, the picture quality cannot be changed even in this case. Furthermore, the JPEG or Wavelet compression technique has a compression ratio lower than that of the MEPG method so as to increase storage capacity twice to three times for the same resolution.

### SUMMARY OF THE INVENTION

Accordingly, the present invention is directed to a network camera and a network digital video recorder that substantially obviate one or more problems due to limitations and disadvantages of the related art.

An object of the present invention is to provide a data processing method and apparatus in a network camera and network digital video recorder system, which can simultaneously satisfy two conflicting requirements for displaying a moving image with high picture quality and smooth motion on a monitor in real time and recording the moving image at a low speed and low picture quality to save the capacity of a hard disc while using a moving picture compression technique such as MPEG.

To accomplish the object of the present invention, there is provided a network camera including a first moving picture encoder for real-time moving picture display and a second moving picture encoder for recording. The first and second moving picture encoders compress a digital image captured by the camera module at different picture qualities and rates (the number of frames per second) separately from each other and transmit the separately compressed images to a network DVR.

To accomplish the object of the present invention, there is also provided a network digital video recorder that receives data, which is obtained by dually compressing an image at different picture qualities and rates, from the network cameras through a network, decompresses data compressed by a first moving picture encoder to display it on a monitor in real time, and stores data compressed by a second moving picture encoder without decompressing it. The network DVR can reproduce, transmit or backs up the stored data if required.

### BRIEF DESCRIPTION OF THE DRAWINGS

The above and other objects, features and advantages of the present invention will be apparent from the following detailed description of the preferred embodiments of the invention in conjunction with the accompanying drawings.

In the drawings:
FIG.1 shows the construction of a conventional DVR system.
FIG. 2 shows the construction of a conventional network camera (integrated with a camera module) and network DVR system.
FIG. 3 shows the construction of a network camera (separated from the camera module) and network DVR system according to the present invention.

### DETAILED DESCRIPTION OF THE INVENTION

Reference will now be made in detail to the preferred embodiments of the present invention, examples of which are illustrated in the accompanying drawings.

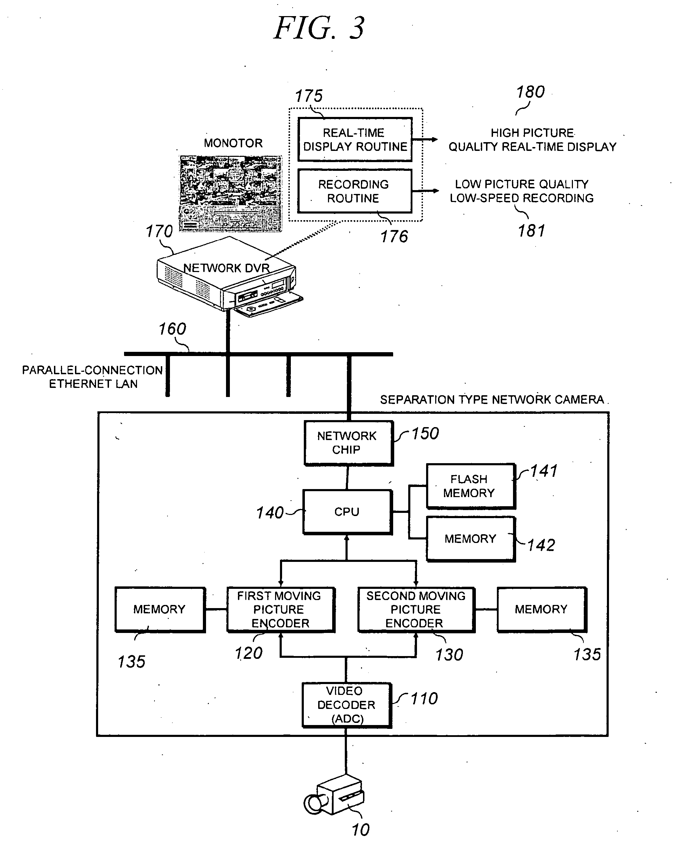

A dual video compression method, a network camera and a network DVR employing the same according to the present invention are explained in detail with reference to FIG.3.

The present invention applies a moving picture compression algorithm that compresses moving pictures with a very high compression ratio, such as MPEG, H.263 and differential wavelet, instead of the still image compression algorithm such as JPEG and wavelet to the network camera and network DVR.

FIG.3 shows the construction of the network camera and network DVR according to the present invention.' The network camera shown in FIG.3 is a separation type network camera that does not include a camera module. Thus, the network camera receives analog video signals from a conventional video camera 10.

Referring to FIG.3, the present invention converts an analog video signal inputted from the video camera 10 into digital video data through a video decoder 110 of the network camera and multiplexes the digital video data to apply the multiplexed data items to first and second moving picture encoders 120 and 130, respectively.

The first and second moving picture encoders 120 and 130 compress the received data items separately from each other. If required, the network camera can have two video decoders 110. In this case, the two video decoders can be respectively connected to the two moving picture encoders 120 and 130.

The first moving picture encoder 120 is a moving picture compressor only for real-time moving picture display. To display an image with the highest picture quality and smooth motion within a bandwidth of a network, the first moving picture encoder 120 compresses the video data at a low compression ratio, the maximum rate and the maximum resolution.

For instance, the first moving picture encoder can compress the video data at 30 frames per second with 740 x 480 resolution in the case of NTSC images and at 25 frames per second with 720x576 resolution in the case of PAL images.

To represent a degree of picture quality of a compressed and decompressed image, a bitrate that is inversely proportional to the compression ratio is generally used rather than the compression ratio. In the case of MPEG-2 algorithm, the highest picture quality as high as DVD grade can be achieved when images are compressed at a bitrate corresponding to 4-5Mbps through CBR (Constant Bit-Rate) control. If the network has an insufficient bandwidth, compression can be performed at a higher compression ratio (lower bitrate), lower resolution and lower rate.

The second moving picture encoder 130 is a moving picture compressor only for recording. In general, recording is carried out at a lower speed and picture quality than those of the displaying operation in order to reduce the bandwidth and hard disc capacity.

For instance, data is compressed at 4 frames per second through VBR (Variable Bit-Rate) using MPEG-4 algorithm. Since the second moving picture encoder independently compresses the video data, it can compress the video data at the same rate and picture quality as those of the real-time display if the operator wants to do and there are sufficient hard disc capacity and bandwidth.

In the case where two video decoders are respectively connected to the first and second moving picture encoders, the moving picture encoders can set resolutions as well as picture qualities and rates separately from each other because the two video decoders can carry out analog-digital conversion at different resolutions. However, the manufacturing cost is slightly increased because the two video decoders are used.

A central processing unit (CPU) 140 controls the video decoder 110, first and second video encoders 120 and 130. A software used for the central control unit 140 to execute its control operation is generally stored in a flash memory 141. In addition, the central processing unit 140 can control a network chip 150 for the Ethernet and a transceiver (not shown), used for transmitting the video data through a network 160 such as the Ethernet.

The central processing unit 140 transmits bit stream packets compressed through the two moving picture compressors to a network digital video recorder 170 through the Ethernet 160 with TCP/IP or UDP/IP protocol.

In a preferred embodiment of the present invention, the video camera 10, video decoder 110, first and second moving picture encoders 120 and 130, central processing unit 140 and network chip 150 can be integrated into a single network camera system or constructed separately from one another. Furthermore, the hardware circuit can be simplified in such a manner that the two moving picture encoders are integrated into the central processing unit if the central processing unit integrated with the moving picture encoders has a sufficiently high processing speed and can be directly interfaced with the video decoder.

The network DVR 170 receives the bit stream data, which is obtained by dually compressing a single image captured by the network camera. Then, the network digital video recorder 170 decompresses the data compressed by the first moving picture encoder 120 to display it on a monitor in real time (175 and 180) and stores the data compressed by the second.moving picture encoder 130 without decompressing it to record the data (176 and 181).

The operator of the network DVR 170 can reproduce, transmit or back up the recorded data if required. The network DVR 170 of the present invention processes all of the above-described operations through software, distinguished from the conventional DVR shown in FIG.1, so that it does not require an additional real-time display board or capture board, resulting in a simplified system configuration.

As described above, the present invention can dually compress an image inputted to the network camera through two moving picture encoders embedded in the network camera. Furthermore, the present invention can display the image in real time and record the image through the network DVR.

Accordingly, network video cameras can be connected in parallel with a network to save installation space and cost, similarly to the conventional network camera and network DVR system. Moreover, the present invention can simultaneously satisfy the requirements of the DVR for displaying moving pictures in real time with a high picture quality and recording the moving pictures at a low speed with a low picture quality.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

Although the invention has been illustrated and described with respect to exemplary embodiments thereof, it should be understood by those skilled in the art that various other changes, omissions and additions may be made therein and thereto, without departing from the spirit and scope of the present invention.

Therefore, the present invention should not be understood as limited to the specific embodiment set forth above but to include all possible embodiments which can be embodies within a scope encompassed and equivalents thereof with respect to the feature set forth in the appended claims.

## Claims

1. A network camera integrated with a camera module, comprising:
a first moving picture encoder for displaying real-time moving picture; and
a second moving picture encoder for recording,
wherein the first and second moving picture encoders compress a digital image captured by the camera module at different picture qualities and rates (the number of frames per second), separately from each other, and transmit the separately compressed images to a network.

2. A network camera separated from a camera module, comprising:
a first moving picture encoder for displaying real-time moving picture; and
a second moving picture encoder for recording,
wherein the network camera converts an analog video signal received from a separate video camera through a cable into digital video data using a video decoder thereof and multiplexes the converted digital video data to respectively apply the multiplexed data to the first and second moving picture encoders, which in turn compress the digital video data at different picture qualities and rates (the number of frames per second), separately from each other, and transmit them to a network.

3. The network camera as claimed in claims 1 or 2, wherein the network camera has two video decoders respectively connected to the first and second moving picture encoders to convert an analog video signal into digital video data with different resolutions such that the first and second moving picture encoders can respectively set resolutions as well as picture qualities and rates, separately from each other.

4. A network digital video recorder that receives data, which is obtained by dually compressing an image at different picture qualities and rates, from each of a plurality of network cameras through a network, decompresses data compressed by a first moving picture encoder to display it on a monitor in real time, and stores data compressed by a second moving picture encoder without decompressing it, the network cameras being integrated with a camera module or separated from the camera module.
